# EUROPEAN PATENT APPLICATION

(11) **EP 4 687 337 A1**
(43) Date of publication of application: **04.02.2026**
(21) Application number: 25192159.9
(22) Date of filing: 28.07.2025
(51) Int. Cl.: H04N 1/00

(54) **IMAGE PROCESSING DEVICE, TERMINAL DEVICE, EDITING METHOD, IMAGE PROCESSING METHOD, AND PROGRAM**

(30) Priority: 29.07.2024 JP 2024122606
(71) Applicant: FUJIFILM Corporation, Tokyo 106-8620 (JP)
(72) Inventor: YOSHIDA, Masako, Saitama (JP); MIZUKAMI, Hiroyuki, Saitama (JP); YOSHIDA, Momoko, Saitama (JP); SHIMURA, Ayaha, Saitama (JP); OSHIMA, Hiroyuki, Saitama (JP)
(74) Representative: Meissner Bolte Partnerschaft mbB

(57) **Abstract**

Provided are an image processing device, a terminal device, an editing method, an image processing method, and a program capable of obtaining a layout image in which selected images are arranged in a layout according to the number of selected images.

An image processing device (40, 110) includes a processor (48). The processor (48) is configured to display, on a screen (34), a layout candidate (76) in which a plurality of frames (76) are arranged in a layout according to the number of one or more selected images (66A) selected from a plurality of images (66). The processor (48) is configured to output a layout image (84) obtained by allocating the selected image (66A) into the frame (76) in response to a given output instruction (86, 88).

## Description

### BACKGROUND OF THE INVENTION

### 1. Field of the Invention

The present disclosure relates to an image processing device, a terminal device, an editing method, an image processing method, and a program.

### 2. Description of the Related Art

JP2013-228432A discloses a photo sticker creation device that images a user in an imaging space, allows the user to edit the obtained captured image, and prints the captured image on a predetermined sticker sheet. The photo sticker creation device disclosed in JP2013-228432A comprises capturing means and printing means. The capturing means captures an image including the user, and is capable of taking at most n captured images (where, n is 2 or more) to be printed on the sticker sheet. The printing means prints n captured images on the sticker sheet in a predetermined layout in a case in which the number of captured images is n, and prints the captured images on the seal paper in a predetermined layout by arranging at least some of the captured images multiple times in a case in which the number of captured images is less than n. In addition, the printing unit prints n captured images on the sticker sheet in a layout selected by the user from among a plurality of layouts.

### SUMMARY OF THE INVENTION

One embodiment according to the present disclosure provides an image processing device, a terminal device, an editing method, an image processing method, and a program capable of obtaining a layout image in which selected images are arranged in a layout according to the number of selected images.

A first aspect according to the present disclosure is an image processing device comprising: a processor, in which the processor is configured to display, on a screen, a layout candidate in which a plurality of frames are arranged in a layout according to the number of one or more selected images selected from a plurality of images, and output a layout image obtained by allocating the selected image into the frame in response to a given output instruction.

A second aspect according to the present disclosure is the image processing device according to the first aspect, in which the layout candidate is output with the selected image allocated into the frame.

A third aspect according to the present disclosure is the image processing device according to the second aspect, in which the selected image allocated into the frame is deleted from the frame in response to a given deletion instruction, and the layout candidate displayed on the screen is changed according to the number of the selected images remaining after the selected image is deleted from the frame.

A fourth aspect according to the present disclosure is the image processing device according to any one of the first to third aspects, in which there are a plurality of the layout candidates, and the layout candidate displayed on the screen is changed in response to a given selection instruction.

A fifth aspect according to the present disclosure is the image processing device according to the fourth aspect, in which the selection instruction is an instruction accompanying a user operation.

A sixth aspect according to the present disclosure is the image processing device according to any one of the first to fifth aspects, in which there are a plurality of the layout candidates, and the plurality of layout candidates are displayed on the screen with an object.

A seventh aspect according to the present disclosure is the image processing device according to the sixth aspect, in which, in a case in which the object is selected, the layout candidate corresponding to the selected object is displayed on the screen.

An eighth aspect according to the present disclosure is the image processing device according to any one of the first to seventh aspects, in which the plurality of images are displayed on the screen as a plurality of thumbnail images, and an image corresponding to a thumbnail image selected from the plurality of thumbnail images among the plurality of images is set as the selected image.

A ninth aspect according to the present disclosure is the image processing device according to any one of the first to eighth aspects, in which the plurality of images include a captured image obtained by performing imaging.

A tenth aspect according to the present disclosure is the image processing device according to any one of the first to ninth aspects, in which the plurality of images include a latest image obtained by performing imaging, and the latest image is preferentially set as the selected image.

An eleventh aspect according to the present disclosure is the image processing device according to the ninth or tenth aspect, in which the imaging is interval imaging or continuous imaging.

A twelfth aspect according to the present disclosure is the image processing device according to any one of the ninth to eleventh aspects, in which the plurality of images include one or more captured images obtained by performing the imaging and one or more additional images already recorded on a first recording medium at a stage before the imaging or at a stage in which the imaging is performed.

A thirteenth aspect according to the present disclosure is the image processing device according to the twelfth aspect, in which the additional image is a candidate image selected from a plurality of candidate images recorded on the first recording medium.

A fourteenth aspect according to the present disclosure is the image processing device according to the thirteenth aspect, in which the plurality of candidate images are displayed on the screen in response to a given display instruction.

A fifteenth aspect according to the present disclosure is the image processing device according to any one of the first to fourteenth aspects, in which the output instruction includes a recording instruction to record the layout image on a second recording medium.

A sixteenth aspect according to the present disclosure is the image processing device according to any one of the first to fifteenth aspects, in which the output instruction includes a print instruction to cause a printing device to print the layout image.

A seventeenth aspect according to the present disclosure is the image processing device according to the sixteenth aspect, in which a default state in which the output of the layout image is suppressed is released on a condition in which the print instruction is given.

An eighteenth aspect according to the present disclosure is a terminal device comprising: the image processing device according to any one of the first to seventeenth aspects; and an image sensor, in which the plurality of images are obtained by performing imaging using the image sensor.

A nineteenth aspect according to the present disclosure is an image processing method comprising: displaying, on a screen, a layout candidate in which a plurality of frames are arranged in a layout according to the number of one or more selected images selected from a plurality of images; and outputting a layout image obtained by allocating the selected image into the frame in response to a given output instruction.

A twentieth aspect according to the present disclosure is a program for causing a computer to execute a process comprising: displaying, on a screen, a layout candidate in which a plurality of frames are arranged in a layout according to the number of one or more selected images selected from a plurality of images; and outputting a layout image obtained by allocating the selected image into the frame in response to a given output instruction.

### BRIEF DESCRIPTION OF THE DRAWINGS

Fig. 1 is a conceptual diagram showing an example of an overall configuration of an image management system.
Fig. 2 is a conceptual diagram showing an example of an aspect in which a user uses a smart device.
Fig. 3 is a block diagram showing an example of a configuration of an electrical hardware of a smart device.
Fig. 4 is a block diagram showing an example of main functions of the smart device.
Fig. 5 is a conceptual diagram showing an example of processing contents of a processor in a case in which interval imaging is performed.
Fig. 6 is a conceptual diagram showing an example of an aspect in which a layout candidate in which frames are arranged in a layout corresponding to the number of a plurality of selected images corresponding to a plurality of selected thumbnail images is generated and displayed.
Fig. 7 is a conceptual diagram showing an example of an aspect in which a layout candidate in which frames are arranged in a layout corresponding to a selected icon is generated and displayed.
Fig. 8 is a conceptual diagram showing an example of an aspect in which a layout candidate is updated in response to a deletion instruction given to the smart device by the user via a touch panel.
Fig. 9 is a conceptual diagram showing an example of processing of printing a layout image on a printing device.
Fig. 10 is a conceptual diagram showing an example of contents of processing of recording a layout image on a recording medium of a server and processing of switching from an acquisition suppression state to an acquisition suppression release state.
Fig. 11 is a conceptual diagram showing an example of an aspect in which a plurality of candidate images are displayed on a screen.
Fig. 12 is a conceptual diagram showing an example of an aspect in which a candidate image selected from the plurality of candidate images is set as an additional image.
Fig. 13 is a conceptual diagram showing an example of an aspect in which a plurality of captured images and a plurality of additional images are converted into thumbnails and displayed on a screen.
Fig. 14 is a flowchart showing an example of a flow of image management processing.
Fig. 15 is a conceptual diagram showing a form example in which the image management processing is performed by an external device in response to a request from the smart device and a processing result is received by the smart device.

### DESCRIPTION OF THE PREFERRED EMBODIMENTS

Hereinafter, an example of an embodiment of an image processing device, a terminal device, an image processing method, and a program according to the present disclosure will be described with reference to the accompanying drawings. The present disclosure can also be applied to a program and a computer program product.

First, terms used in the following description will be described.

CPU is an abbreviation for "central processing unit". GPU is an abbreviation for "graphics processing unit". GPGPU is an abbreviation for "general-purpose computing on graphics processing units". APU is an abbreviation for "accelerated processing unit". TPU is an abbreviation for "tensor processing unit". RAM is an abbreviation for "random access memory". EEPROM is an abbreviation for "electrically erasable programmable read-only memory". ASIC is an abbreviation for "application specific integrated circuit". PLD is an abbreviation for "programmable logic device". FPGA is an abbreviation for "field-programmable gate array". SoC is an abbreviation for "system-on-a-chip". SSD is an abbreviation for "solid state drive". CMOS is an abbreviation for "complementary metal oxide semiconductor". CCD is an abbreviation for "charge coupled device". USB is an abbreviation for "universal serial bus". UI is an abbreviation for "user interface". I/F is an abbreviation for "interface". LAN is an abbreviation for "local area network". WAN is an abbreviation for "wide area network". 5G is an abbreviation for "5th generation mobile communication system".

In the following description, a processor with a reference numeral (hereinafter, simply referred to as a "processor") may be one computing device or a combination of a plurality of computing devices. In addition, the processor may be one type of computing device or a combination of a plurality of types of computing devices. Examples of the computing device include a CPU, a GPU, a GPGPU, an APU, and a TPU.

In the following description, a memory with a reference numeral is a memory such as a RAM that temporarily stores information, and is used as a work memory by the processor.

In the following description, a storage with a reference numeral is one or a plurality of non-volatile storage devices that store various programs, various parameters, and the like. Examples of the non-volatile storage device include a flash memory, a magnetic disk, and a magnetic tape. Examples of the storage also include a cloud storage.

In the following embodiment, an external I/F with a reference numeral controls transmission and reception of various types of information between a plurality of devices connected to each other. An example of the external I/F is a USB interface. A communication I/F including a communication processor, an antenna, and the like may be applied to the external I/F. The communication I/F controls communication between a plurality of computers. Examples of a communication standard applied to the communication I/F include a wireless communication standard including 5G, Wi-Fi (registered trademark), and Bluetooth (registered trademark).

In the following embodiment, "A and/or B" is synonymous with "at least one of A or B". That is, "A and/or B" may refer to A alone, B alone, or a combination of A and B. In addition, in the present specification, in a case in which three or more matters are expressed with the connection of "and/or", the same concept as "A and/or B" is applied.

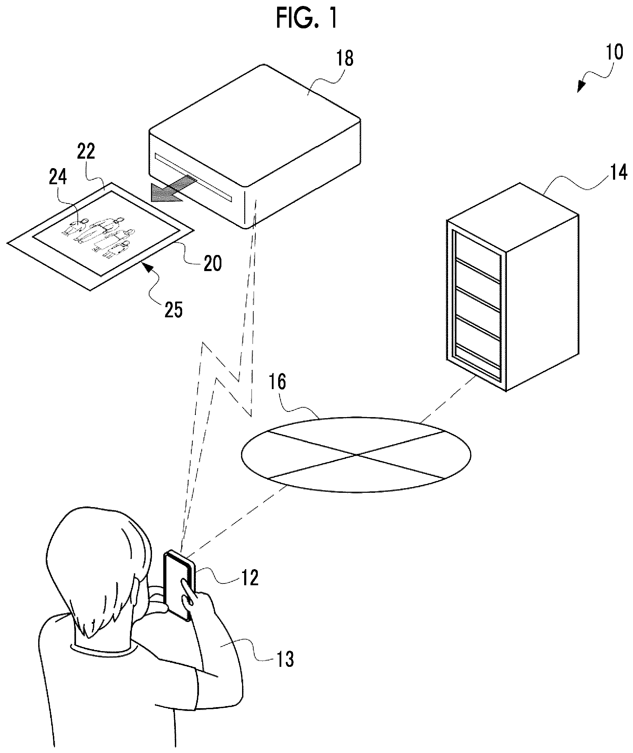

As shown in Fig. 1 as an example, an image management system 10 comprises a smart device 12 and a server 14. The smart device 12 is an example of a "terminal device" according to the present disclosure.

In the example shown in Fig. 1, a smartphone is shown as the smart device 12. The smartphone is merely an example, and a smartwatch, smart glasses, a tablet terminal, a personal computer, or the like may be used. The smart device 12 is used by a user 13.

The smart device 12 and the server 14 are communicably connected via a network 16. Examples of the network 16 include a wide area network (WAN) and a local area network (LAN).

The server 14 provides the smart device 12 with a service in response to a request from the smart device 12. That is, the server 14 executes processing in response to a request from the smart device 12. In addition, the server 14 provides a result of the executed processing to the smart device 12 that has made the request.

The smart device 12 is communicably connected to a printing device 18. An example of the printing device 18 is an instant printer that prints an image on an instant film 20. An instant printer is exemplified here, but this is merely an example. Any device having a communication function and a printing function, such as a multifunction device capable of communicating with a terminal device such as the smart device 12, may be employed. In addition, the present disclosure is established even in a case of a device in which an imaging function and a printing function are integrated instead of the smart device 12. An example of the device in which the imaging function and the printing function are integrated is a hybrid instant camera (for example, a camera equipped with a plurality of functions in which an image obtained by imaging is displayed on a screen, an image obtained by imaging is recorded on a recording medium such as a memory card, editing and/or processing is performed on an image displayed on a screen in response to an instruction from a user, and an image designated by a user is printed). In addition, the instant film 20 is also merely an example. Another type of film, printing paper, or the like may be employed, or any medium on which the image can be printed (in other words, medium on which the image can be recorded) may be employed. In the present embodiment, development is also included in the concept of printing.

In the example shown in Fig. 1, the printing device 18 prints an image 24 (for example, an image transmitted from the smart device 12) on a surface 22 of the instant film 20 in response to an instruction given by the smart device 12 to generate a printed matter 25 (business card-sized instant photograph in the example shown in Fig. 1). The printing device 18 discharges the generated printed matter 25 to the outside of the printing device 18. The printing device 18 is an example of a "printing device" according to the present disclosure.

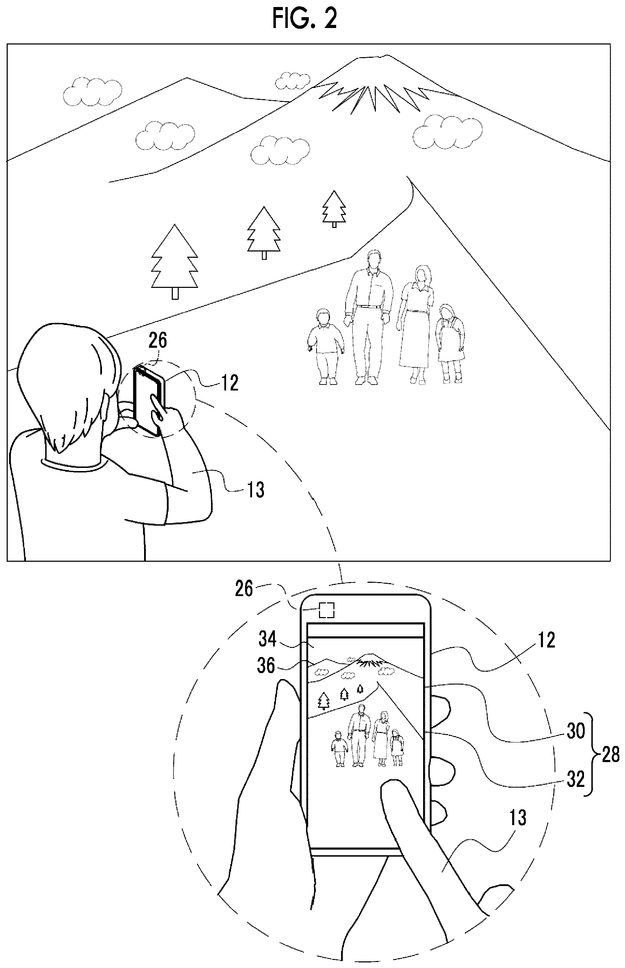

As shown in Fig. 2 as an example, the smart device 12 comprises an imaging apparatus 26, and the imaging apparatus 26 images a subject in response to an instruction given by the user 13.

The smart device 12 comprises a touch panel display 28. The touch panel display 28 has a display 30 (for example, a liquid crystal display or an electroluminescent display) and a touch panel 32, and is formed by, for example, superimposing the touch panel 32 on a screen 34 of the display 30. In the example shown in Fig. 2, an aspect example in which a live view image 36 obtained by imaging the subject is displayed on the screen 34 is shown. The screen 34 is an example of a "screen" according to the present disclosure.

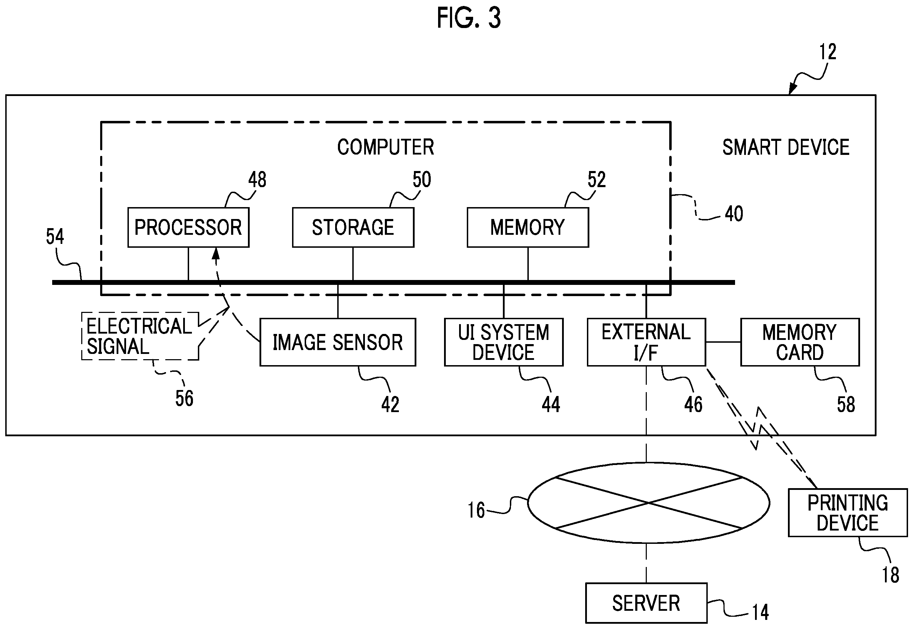

As shown in Fig. 3 as an example, the smart device 12 comprises a computer 40, an image sensor 42, a user interface (UI) system device 44, and an external I/F 46. The computer 40 is an example of an "image processing device" and a "computer" according to the present disclosure. The image sensor 42 is an example of an "image sensor" according to the present disclosure.

The computer 40 comprises a processor 48, a storage 50, and a memory 52. The processor 48, the storage 50, and the memory 52 are connected to a bus 54. The processor 48 is an example of a "processor" according to the present disclosure.

The image sensor 42 is connected to the bus 54. An example of the image sensor 42 is a CMOS image sensor. The image sensor 42 generates an electrical signal 56 indicating the subj ect by imaging the subj ect under the control of the processor 48. The processor 48 acquires the electrical signal 56 from the image sensor 42 and executes various types of signal processing on the electrical signal 56.

Here, a CMOS image sensor is given as an example of the image sensor 42, but this is merely an example, and the image sensor 42 may be other types of image sensors such as a CCD image sensor.

The UI system device 44 is connected to the bus 54. The UI system device 44 includes the touch panel display 28 (see Fig. 2), one or more hard keys (not shown), a microphone (not shown), a speaker (not shown), and the like. The UI system device 44 receives an instruction from the user and outputs a signal indicating the received instruction to the processor 48. In addition, the UI system device 44 presents various types of information to the user under the control of the processor 48. The presentation of the various types of information is realized, for example, by displaying the various types of information on the display 30 (see Fig. 2) or by outputting the various types of information as voice from the speaker.

The external I/F 46 is connected to the bus 54. The external I/F 46 controls the exchange of various types of information between the computer 40 and an external device. In the example shown in Fig. 3, as the external device, the server 14, the printing device 18, and a memory card 58 are shown. The server 14 is communicably connected to the external I/F 46 via the network 16. The printing device 18 is communicably connected to the external I/F 46 via Bluetooth (registered trademark) or the like. The memory card 58 is connected to the external I/F 46 by being loaded into the smart device 12.

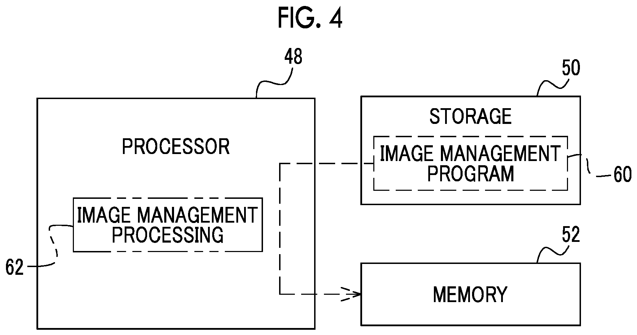

As shown in Fig. 4 as an example, an image management program 60 is stored in the storage 50. The image management program 60 is an example of a "program" according to the present disclosure.

The processor 48 performs image management processing 62. The image management processing 62 is realized by the processor 48 reading out the image management program 60 from the storage 50 and executing the read-out image management program 60 on the memory 52. The image management processing 62 is an example of "processing" according to the present disclosure.

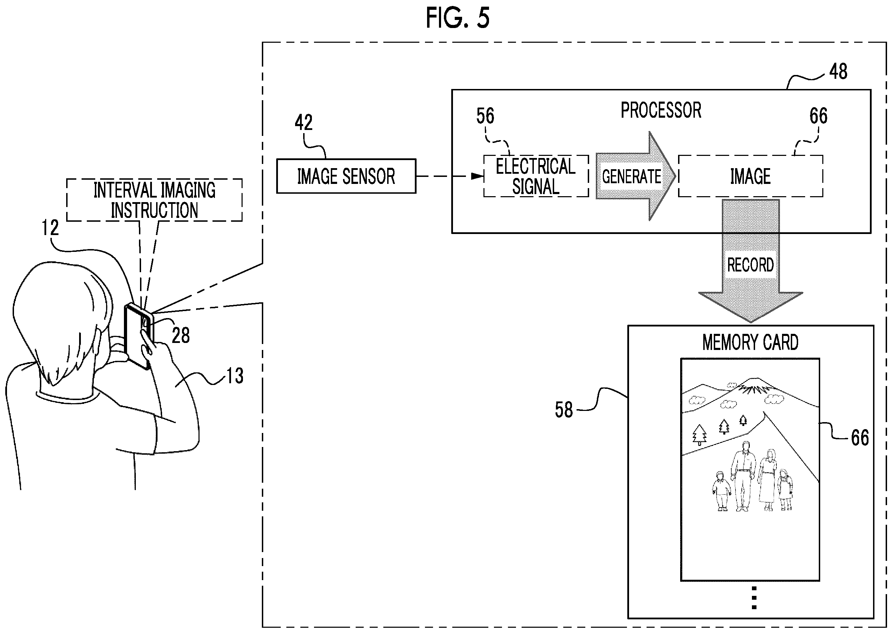

As shown in Fig. 5 as an example, in a case in which an interval imaging instruction is given by the user 13, the smart device 12 executes interval imaging using the image sensor 42. In general, the interval imaging is also referred to as interval time lapse. The interval imaging is processing in which the image sensor 42 performs main exposure continuously at a regular time interval and images obtained by the main exposure are continuously output. Here, the interval imaging is exemplified here, but the interval imaging is merely an example, and the present disclosure is established even in a case in which continuous imaging, which is an imaging method of obtaining a plurality of images at a time interval shorter than the interval imaging, is applied instead of the interval imaging.

In a case in which the interval imaging instruction is given to the smart device 12, the processor 48 acquires the electrical signal 56 generated by performing the main exposure using the image sensor 42 at a regular time interval, from the image sensor 42. The processor 48 generates an image 66 (for example, a chromatic image or an achromatic image) showing the subject by executing various types of signal processing on the electrical signal 56 acquired from the image sensor 42. The images 66 are generated at regular time intervals and are sequentially recorded on the memory card 58 by the processor 48. The memory card 58 is an example of a "first recording medium" according to the present disclosure.

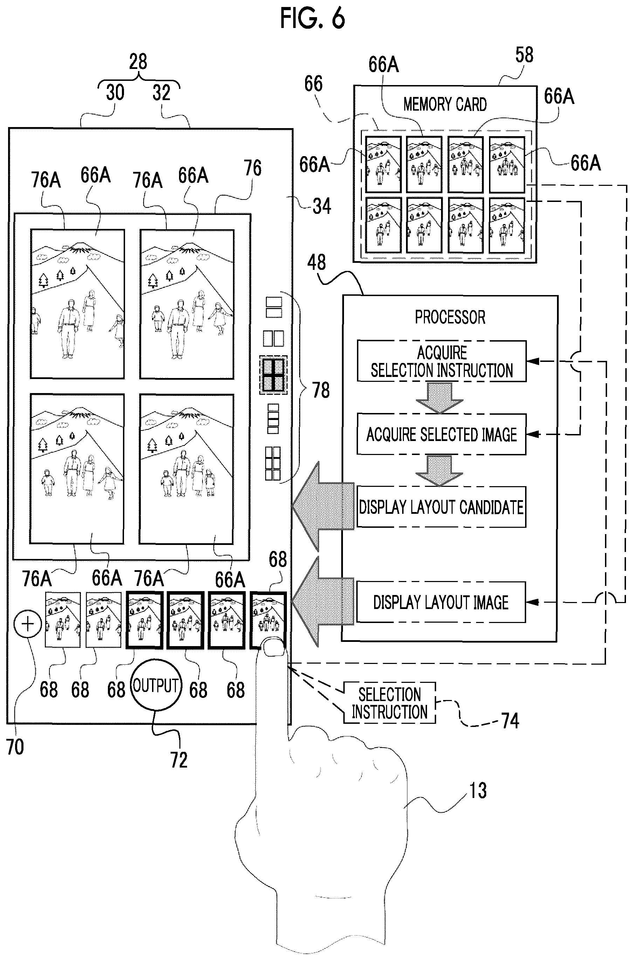

As shown in Fig. 6 as an example, the processor 48 acquires the images 66 from the memory card 58. The processor 48 generates thumbnail images 68 by reducing the size of the images 66 acquired from the memory card 58 and displays the thumbnail images 68 on the screen 34. Each time the image 66 is recorded on the memory card 58 by performing interval imaging, the image 66 recorded on the memory card 58 is sequentially reduced in size and converted into the thumbnail image 68. The thumbnail images 68 are displayed on the screen 34 in a time-series arrangement. In the example shown in Fig. 6, at the bottom of the screen 34, the thumbnail images 68 corresponding to the images 66 obtained earlier in time to the thumbnail images 68 corresponding to the images 66 obtained later in time are arranged and displayed at regular intervals from the left side in front view of the screen 34 to the right side in front view of the screen 34.

An addition instruction key 70 and an output instruction key 72 are displayed on the screen 34. The addition instruction key 70 is displayed on the left side in front view of the screen 34 with respect to the thumbnail image 68 displayed on the left side in front view of the screen 34. The addition instruction key 70 is a soft key that receives an instruction to add the display of the thumbnail images 68 corresponding to the remaining images 66 recorded on the memory card 58. The user 13 turns on the addition instruction key 70 as a trigger for adding the display of the thumbnail images 68 corresponding to the remaining images 66 recorded on the memory card 58.

The output instruction key 72 is displayed below the position at which the plurality of thumbnail images 68 are displayed in front view of the screen 34. The output instruction key 72 is a soft key that receives an instruction to output the image 66 selected by the user 13 to a predetermined output destination. Examples of the predetermined output destination include the server 14 and the printing device 18. For example, the user 13 turns on the output instruction key 72 as a trigger for uploading the image 66 to the server 14 and for causing the printing device 18 to print the image 66.

The processor 48 acquires a selection instruction 74 given by the user 13 via the touch panel 32. The selection instruction 74 is an instruction accompanying an operation (for example, a tap on the touch panel 32) of the user 13. The processor 48 selects one or more images 66 from the plurality of images 66 recorded on the memory card 58 in response to the acquired selection instruction 74. In the example shown in Fig. 6, an image 66 corresponding to a thumbnail image 68 selected from the plurality of thumbnail images 68 displayed on the screen 34 in response to the selection instruction 74 of the user 13 is selected as the selected image 66A by the processor 48. The plurality of images 66 recorded on the memory card 58 are an example of a "plurality of images" according to the present disclosure. The selection instruction 74 is an example of a "selection instruction" according to the present disclosure.

The thumbnail image 68 selected in response to the selection instruction 74 of the user 13 is displayed in a display aspect distinguishable from the thumbnail images 68 that are not selected. For example, an outer edge of the thumbnail image 68 selected in response to the selection instruction 74 of the user 13 is displayed in a more emphasized manner than outer edges of the thumbnail images 68 that are not selected. In the example shown in Fig. 6, four thumbnail images 68 from the right side to the left side in front view of the screen 34 are selected in response to the selection instruction 74.

The processor 48 acquires, from the memory card 58, a selected image 66A, which is the image 66 selected in response to the selection instruction 74 of the user 13 from the plurality of images 66 recorded on the memory card 58. The processor 48 displays, on the screen 34, a layout candidate 76 in which a plurality of frames 76A are arranged in a layout according to the number of the selected images 66A. In the example shown in Fig. 6, the layout candidate 76 corresponding to the four selected images 66A, that is, the layout candidate 76 including four frames 76A arranged in a length × width = 2 × 2 arrangement is displayed on the screen 34.

There are a plurality of layout candidates 76. The processor 48 changes the layout candidate 76 in response to the selection instruction 74. In the example shown in Fig. 6, the layout candidate 76 including the four frames 76A arranged in a length × width = 2 × 2 arrangement is selected. However, in a case in which six thumbnail images 68 are selected in response to the selection instruction 74, six images 66 corresponding to the six thumbnail images 68 are set as six selected images 66A, and a layout candidate 76 including six frames 76A arranged in a vertical × horizontal = 3 × 2 arrangement corresponding to the six selected images 66A is selected by the processor 48 and displayed on the screen 34. **In** this case as well, the corresponding selected images 66A are displayed on the screen 34 in a state of being allocated into the six frames 76A.

The processor 48 allocates the selected images 66A into the frames 76A in the layout candidate 76 and displays the selected images 66A on the screen 34. That is, each of the selected images 66A is displayed on the screen 34 in a state of being fitted into the corresponding frame 76A. Here, a form example in which the selected images 66A in a state of being fitted into the frames 76Ain the layout candidate 76 are displayed on the screen 34 has been described, but this is merely an example, and the layout candidate 76 with the selected images 66A fitted into the frames 76A may be recorded on the memory card 58 or may be transmitted to the server 14.

The processor 48 displays the plurality of layout candidates 76 on the screen 34 with a plurality of icons 78. Then, the icon 78 corresponding to the layout candidate 76 currently employed is displayed in a more emphasized manner than the other icons 78. Here, the icon 78 is exemplified, but this is merely an example, and a soft key with a mark that reminds the user 13 of the layout may be used.

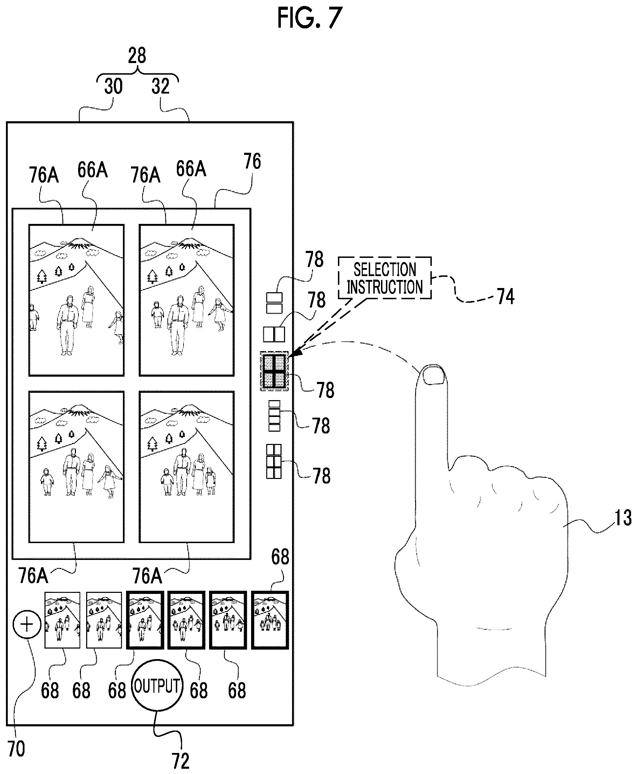

In the example shown in Fig. 6, a form example has been described in which an image 66 corresponding to a thumbnail image 68 selected from the plurality of thumbnail images 68 in response to the selection instruction 74 is set as the selected image 66A, and the layout candidate 76 in which the frames 76A are arranged in a layout according to the number of the selected images 66A is selected, but the present disclosure is not limited to this. For example, as shown in Fig. 7, the layout candidate 76 corresponding to the icon 78 selected in response to an instruction accompanying an operation of the user 13 (for example, a tap or a swipe on the touch panel 32), that is, the selection instruction 74 from the plurality of icons 78 may be selected and displayed on the screen 34. In this case, the thumbnail images 68 (in the example shown in Fig. 7, four thumbnail images 68 from the right side to the left side in front view of the screen 34) as many as the number corresponding to the number of the frames 76A included in the selected layout candidate 76 are selected. Here, the thumbnail image 68 corresponding to the latest image 66 obtained by performing the interval imaging is selected with the highest priority. Then, the thumbnail images 68 corresponding to the images 66 in time series starting from the latest image 66 are preferentially selected. Then, the image 66 corresponding to the selected thumbnail image 68 is set as the selected image 66A, and the selected image 66A is allocated into the frame 76A of the selected layout candidate 76 and displayed on the screen 34.

In the present embodiment, the selected image 66A is an example of a "selected image" according to the present disclosure. In addition, in the present embodiment, the latest image 66 obtained by performing the interval imaging is an example of a "latest image" according to the present disclosure. In addition, in the present embodiment, the layout candidate 76 is an example of a "layout candidate" according to the present disclosure. In addition, in the present embodiment, the frame 76A is an example of a "frame" according to the present disclosure. In addition, in the present embodiment, the thumbnail image 68 is an example of a "thumbnail image" according to the present disclosure. In addition, in the present embodiment, the icon 78 is an example of an "object" according to the present disclosure.

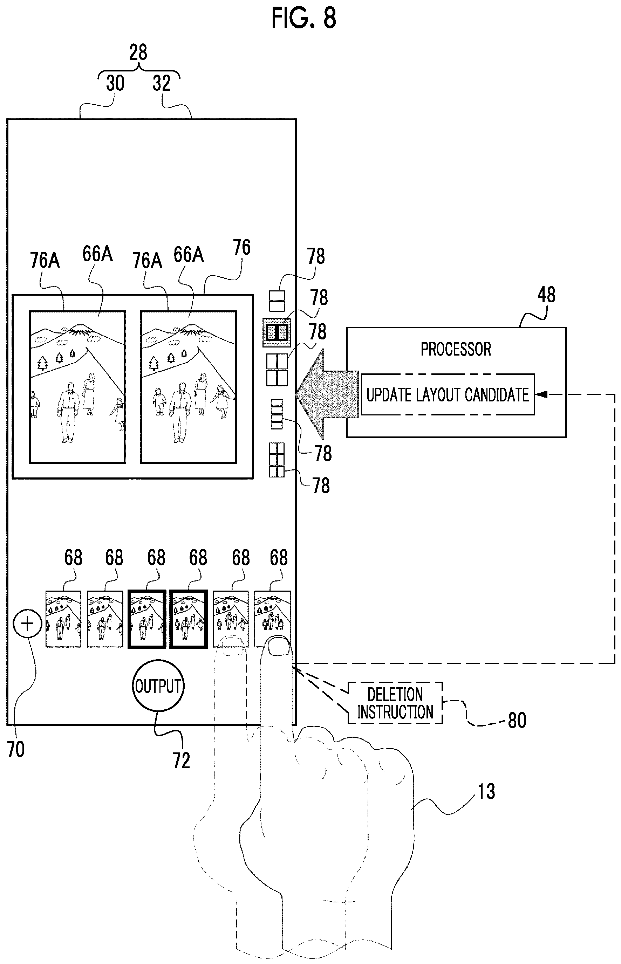

As shown in Fig. 8 as an example, the processor 48 acquires a deletion instruction 80 given by the user 13 via the touch panel 32. The deletion instruction 80 is an instruction to delete the selected image 66A from the frame 76A. The deletion instruction 80 is realized by an operation of the user 13 (for example, a tap, a flick, or a long press on the touch panel 32). The deletion instruction 80 is an example of a "deletion instruction" according to the present disclosure.

The processor 48 deletes the selected image 66A currently allocated to the frame 76A in response to the acquired deletion instruction 80. In the example shown in Fig. 8, the deletion instruction 80 is given to two thumbnail images 68 on the right side in front view of the screen 34, and the selected images 66A corresponding to the two thumbnail images 68 to which the deletion instruction 80 is given are deleted from the frame 76A. In response to this, the processor 48 updates the layout candidate 76. That is, the processor 48 changes the layout candidate 76 (for example, the layout candidate 76 shown in Fig. 7) currently employed to a layout candidate 76 (for example, a layout candidate 76 shown in Fig. 8) in which the frames 76A are arranged in a layout according to the number of the selected images 66A remaining after the selected image 66A is deleted from the frame 76A. In the example shown in Fig. 8, the layout candidate 76 including four frames 76A of length × width = 2 × 2 is changed to the layout candidate 76 including two frames 76A of length × width = 1 × 2. In the two frames 76A included in the layout candidate 76 after the change, the selected image 66A remains in an allocated state as in the contents shown in Figs. 6 and 7. In addition, as for the icon 78, the icon 78 indicating the layout candidate 76 including two frames 76A of length × width = 1 × 2 is displayed in a more emphasized manner than the other icons 78.

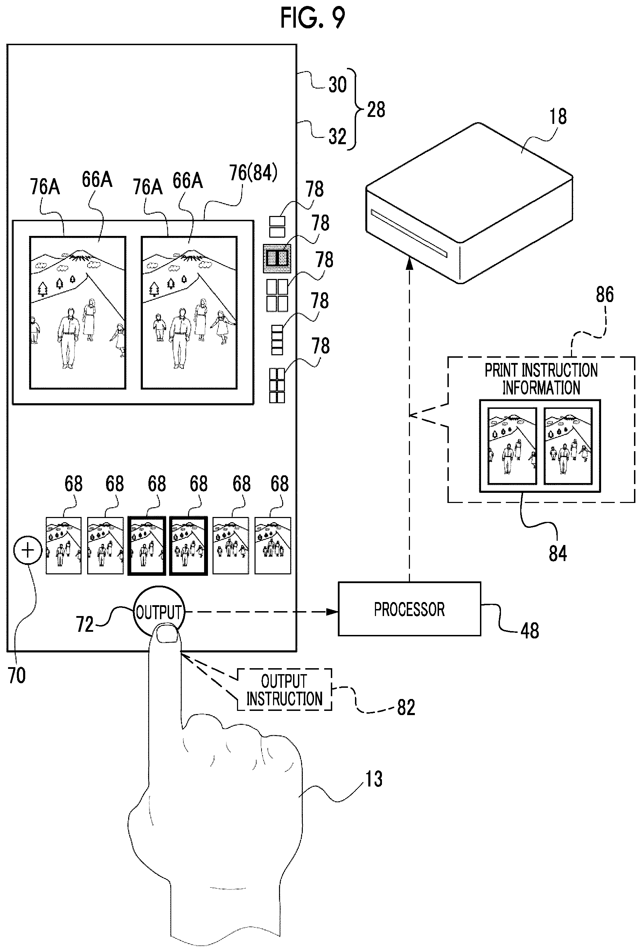

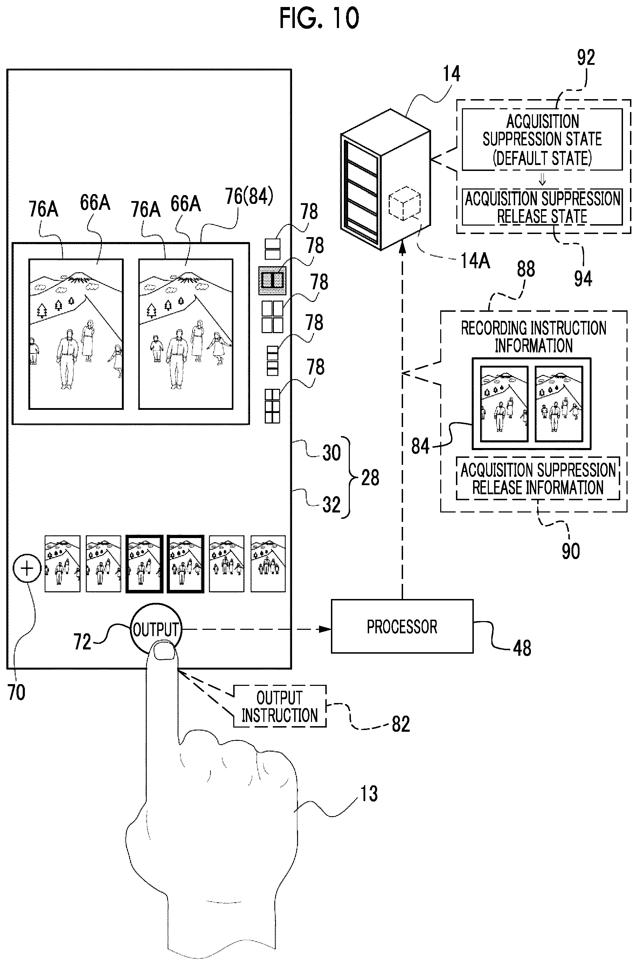

As shown in Figs. 9 and 10 as an example, the processor 48 acquires an output instruction 82 given by the user 13 via the touch panel 32. The output instruction 82 is realized by turning on the output instruction key 72. The processor 48 outputs the layout image 84 in response to the output instruction 82. The layout image 84 is an image obtained by allocating (for example, fitting) the selected images 66A into all the frames 76A included in the layout candidate 76 displayed on the screen 34.

In the example shown in Fig. 9, the processor 48 determines the selected images 66A allocated into all the frames 76A included in the layout candidate 76 displayed on the screen 34 in response to the output instruction 82, and generates print instruction information 86 including the layout image 84. The print instruction information 86 is information for instructing the printing device 18 to perform printing. The print instruction information 86 is an example of an "output instruction" and a "print instruction" according to the present disclosure.

The processor 48 transmits the print instruction information 86 to the printing device 18. The printing device 18 receives the print instruction information 86, generates the printed matter 25 (see Fig. 1) by printing the layout image 84 included in the received print instruction information 86 on the front surface 22 of the instant film 20 as the image 24 (see Fig. 1), and discharges the printed matter 25 to the outside of the printing device 18.

As shown in Fig. 10 as an example, the processor 48 generates recording instruction information 88, which is information for instructing the server 14 to record the layout image 84 on a recording medium 14A, in response to the output instruction 82. The recording instruction information 88 includes the layout image 84 and acquisition suppression release information 90. The recording instruction information 88 is an example of an "output instruction" and a "recording instruction" according to the present disclosure.

The server 14 includes the recording medium 14A. Examples of the recording medium 14A include a flash memory and a hard disk. A flash memory, a hard disk, or the like, which is an example of the recording medium 14A, is an example of a "second recording medium" according to the present disclosure. The server 14 receives the recording instruction information 88 and records the layout image 84 included in the received recording instruction information 88 on the recording medium 14A.

For the recording medium 14A, either an acquisition suppression state 92 in which the acquisition of the layout image 84 from the outside is suppressed or an acquisition suppression release state 94 in which the suppression of the acquisition of the layout image 84 from the outside is released is set. The acquisition suppression state 92 is set as a default state for the recording medium 14A.

The recording instruction information 88 includes the acquisition suppression release information 90. The acquisition suppression release information 90 is information for issuing an instruction to release the acquisition suppression state 92. In a case in which the recording medium 14A is set to the acquisition suppression state 92, the server 14 releases the acquisition suppression state 92 on a condition in which the recording instruction information 88 is given by the processor 48. That is, in a case in which the recording medium 14A is set to the acquisition suppression state 92, the server 14 switches from the acquisition suppression state 92 to the acquisition suppression release state 94 in accordance with the acquisition suppression release information 90 included in the received recording instruction information 88. As a result, the layout image 84 can be acquired from the recording medium 14A. The number of times the layout image 84 is acquired may be restricted. As an example of restricting the number of times the layout image 84 is acquired, there is a restriction that the acquisition (that is, the download) of the layout image 84 is permitted only a predetermined number of times (for example, once) for a terminal device that has requested the acquisition (that is, the download) of the layout image 84 to the server 14.

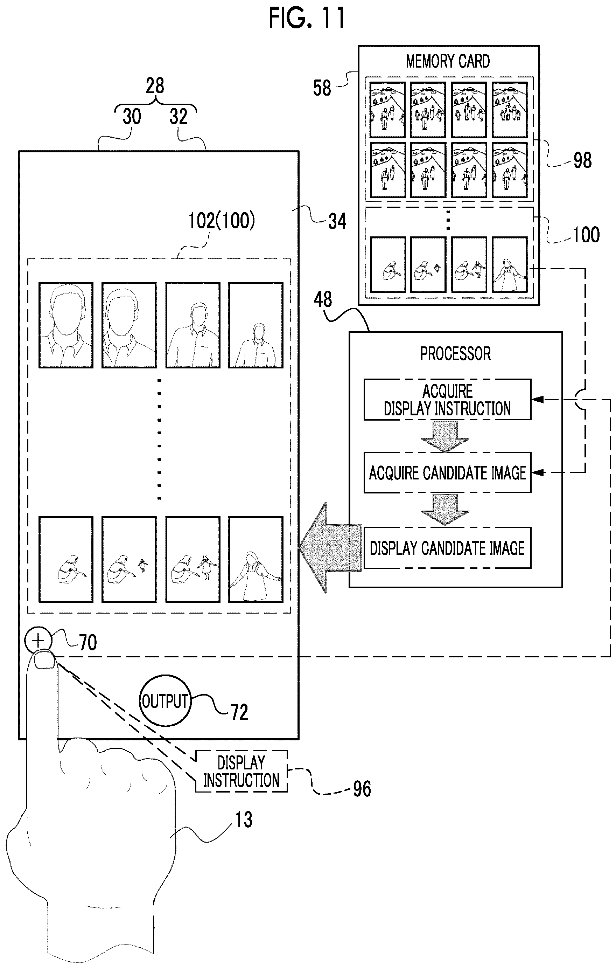

As shown in Fig. 11 as an example, the processor 48 acquires a display instruction 96 given by the user 13 via the touch panel 32. The display instruction 96 is an instruction to additionally display an image that is a candidate for the selected image 66A on the screen 34. The display instruction 96 is realized in a case in which the user 13 turns on the addition instruction key 70. The display instruction 96 is an example of a "display instruction" according to the present disclosure.

The memory card 58 records one or more captured images 98 obtained by performing the latest interval imaging and one or more existing images 100. One or more captured images 98 are converted into thumbnails and displayed on the screen 34 as candidates for the selected image 66A (see Figs. 6 and 7). The captured image 98 may be an image captured by an imaging method (for example, continuous imaging) other than the interval imaging.

The one or more existing images 100 recorded on the memory card 58 refer to images already recorded on the memory card 58 at a stage before the latest interval imaging is performed or at a stage in which the latest interval imaging is performed (in other words, images already recorded on the memory card 58 at a stage before the captured image 98 is recorded on the memory card 58). The existing image 100 may be an image captured by the imaging apparatus 26 or may be an image obtained by another method.

The processor 48 acquires one or more candidate images 102 from the memory card 58 in response to the display instruction 96. Then, the processor 48 displays a list of one or more candidate images 102 acquired from the memory card 58 on the screen 34. In the example shown in Fig. 11, a plurality of the existing images 100 recorded on the memory card 58 are displayed in a list on the screen 34 as a plurality of the candidate images 102. The plurality of candidate images 102 are examples of a "plurality of candidate images" according to the present disclosure.

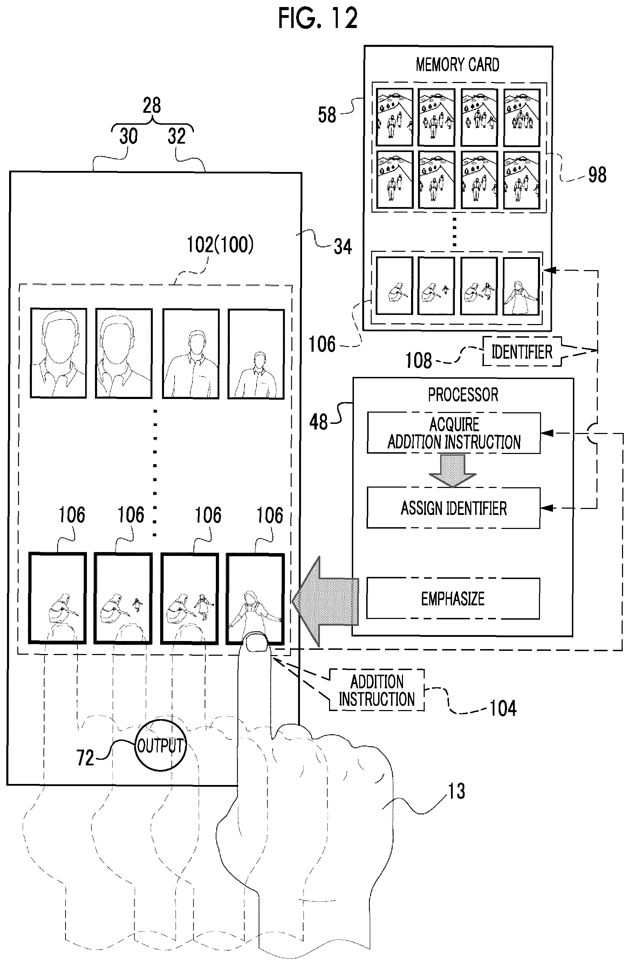

As shown in Fig. 12 as an example, the processor 48 selects an additional image 106 from the plurality of candidate images 102 displayed on the screen 34 in response to an addition instruction 104 given by the user 13 via the touch panel 32. The addition instruction 104 is realized by an instruction accompanying an operation of the user 13 (for example, a tap, a flick, or a long press on the touch panel 32). The additional image 106 refers to an image that is additionally displayed on the screen 34 as a thumbnail in addition to the captured image 98 as a candidate for the selected image 66A. In the example shown in Fig. 12, four candidate images 102 among the plurality of candidate images 102 displayed on the screen 34 are selected as the additional images 106.

The processor 48 displays the candidate images 102 selected as the additional images 106 in response to the addition instruction 104 in a more emphasized manner in the screen 34 than the other candidate images 102. In addition, the processor 48 assigns an identifier 108 that is capable of identifying the additional image 106 to the candidate image 102 selected as the additional image 106 in response to the addition instruction 104. As a result, in the plurality of candidate images 102 recorded on the memory card 58, the candidate image 102 that is the additional image 106 and the candidate image 102 that is not the additional image 106 can be identified.

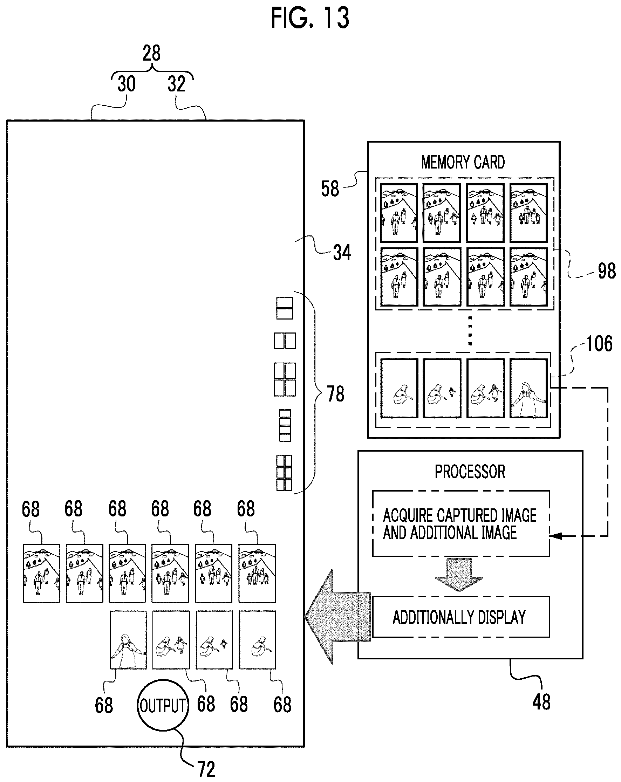

As shown in Fig. 13 as an example, the processor 48 acquires the plurality of captured images 98 and the plurality of additional images 106 recorded on the memory card 58. The plurality of captured images 98 and the plurality of additional images 106 acquired by the processor 48 are handled in the same manner as the plurality of images 66 shown in Fig. 6. That is, the processor 48 displays the plurality of captured images 98 on the screen 34 as the plurality of thumbnail images 68 in the same manner as in the example shown in Fig. 6, and also additionally displays the plurality of additional images 106 on the screen 34 as the plurality of thumbnail images 68. In this case as well, the plurality of icons 78 are displayed on the screen 34, and the icons 78 are handled in the same manner as in the examples shown in Figs. 6 and 7.

In the example shown in Fig. 13, the captured image 98 recorded on the memory card 58 is an example of a "captured image" according to the present disclosure. In addition, in the example shown in Fig. 13, the plurality of captured images 98 and the plurality of additional images 106 corresponding to the plurality of thumbnail images 68 displayed on the screen 34 are examples of a "plurality of images" according to the present disclosure.

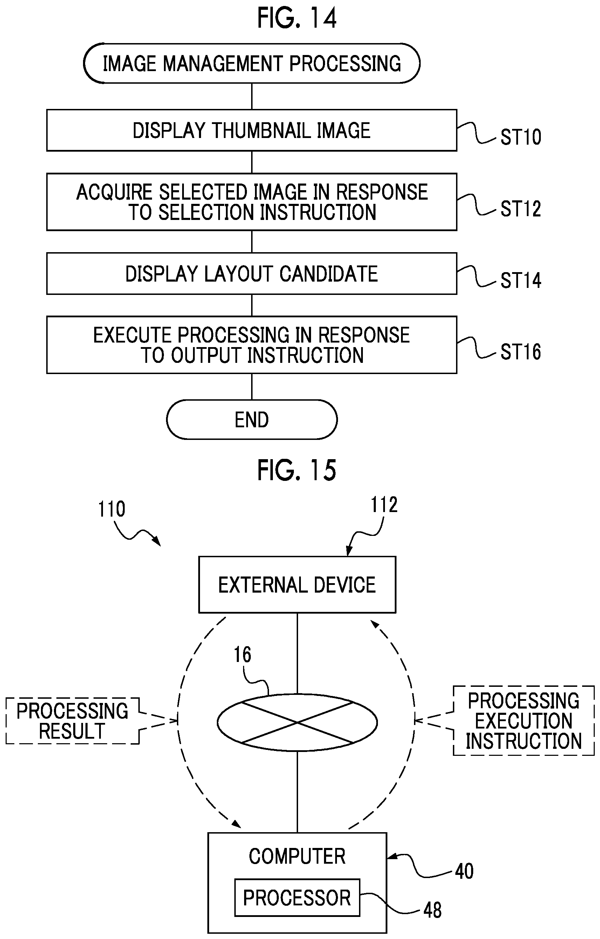

Next, an example of a flow of main processing included in the image management processing 62 of the smart device 12 will be described with reference to Fig. 14. A plurality of processes shown in the flowchart of Fig. 14 are examples of an "image processing method" according to the present disclosure. In the following, for convenience of description, the description will be made on the premise that the plurality of images 66 obtained by performing the interval imaging by the imaging apparatus 26 are recorded on the memory card 58.

In step ST10 shown in Fig. 14, the processor 48 generates a plurality of thumbnail images 68 by reducing the size of the plurality of images 66 recorded on the memory card 58, and displays the generated plurality of thumbnail images 68 on the screen 34 (see Fig. 6). After the process of step ST10 is executed, the image management processing 62 proceeds to step ST12.

In step ST12, the processor 48 selects one or more thumbnail images 68 from the plurality of thumbnail images 68 in response to the selection instruction 74 given by the user 13 via the touch panel 32, thereby acquiring one or more images 66 corresponding to the one or more selected thumbnail images 68 as one or more selected images 66A (see Fig. 6). The number of the selected images 66A can be decreased by the deletion instruction 80 or increased by the selection instruction 74 or the addition instruction 104. After the process of step ST12 is executed, the image management processing 62 proceeds to step ST14.

In step ST14, the processor 48 selects the layout candidate 76 including the frames 76A as many as the number corresponding to the number of the selected images 66A from the plurality of layout candidates 76, and allocates a corresponding selected image 66A into each of all the frames 76A included in the selected layout candidate 76. Then, the processor 48 displays the layout candidate 76 in which the corresponding selected image 66A is allocated to each of all the frames 76A on the screen 34 (see Fig. 6). After the process of step ST14 is executed, the image management processing 62 proceeds to step ST16.

In step ST16, the processor 48 executes processing in response to the output instruction 82 given by the user 13 via the touch panel 32. Examples of the processing in response to the output instruction 82 include processing of causing the printing device 18 to print the layout image 84 and processing of recording the layout image 84 on the recording medium 14A. Other examples of the processing in response to the output instruction 82 include processing of recording the layout image 84 on the memory card 58 and/or processing of transmitting the layout image 84 to an electronic apparatus other than the smart device 12 to execute specific processing (for example, editing the layout image 84 and/or transmitting the layout image 84). After the process of step ST16 is executed, the image management processing ends.

As described above, in the present embodiment, the layout candidate 76 in which the frames 76A are arranged in a layout according to the number of the plurality of selected images 66A selected from the plurality of images 66 is displayed on the screen 34. Then, the layout image 84 obtained by allocating the selected image 66A into the frame 76A is output in response to the output instruction 82. As a result, it is possible to quickly obtain the layout image 84 in which the selected images 66A are arranged in a layout according to the number of the selected images 66A, compared to a case in which the user 13 manually selects and lays out any image 66 among the plurality of images 66.

In addition, in the present embodiment, the selected image 66Ais allocated into the frame 76A of the layout candidate 76 displayed on the screen 34. Accordingly, the user 13 can visually confirm whether the laid out selected image 66A matches the preference of the user 13.

In addition, in the present embodiment, the selected image 66A allocated into the frame 76A is deleted from the frame 76A in response to the deletion instruction 80, and the layout candidate 76 displayed on the screen 34 is changed according to the number of the selected images 66A remaining after the selected image 66A is deleted from the frame 76A. Accordingly, even in a case in which the number of the selected images 66A is reduced, it is possible to display the layout candidate 76 in which the frames 76A are arranged in a layout according to the number of the selected images 66A on the screen 34 without causing the user 13 to take time and effort.

In addition, in the present embodiment, there are a plurality of layout candidates 76, and the layout candidate 76 displayed on the screen 34 is changed in response to the selection instruction 74 accompanying the operation of the user 13. Accordingly, it is possible to easily allow the user 13 to select the layout candidate 76 preferred by the user 13.

In addition, in the present embodiment, there are a plurality of layout candidates 76, and the plurality of layout candidates 76 are displayed on the screen 34 with the plurality of icons 78. Accordingly, it is possible to easily allow the user 13 to select the layout candidate 76 preferred by the user 13.

In addition, in the present embodiment, in a case where any of the plurality of icons 78 is selected, the layout candidate 76 corresponding to the selected icon 78 (that is, the layout candidate 76 in which the plurality of frames 76A are arranged in a layout in which an outline of an appearance is represented by the selected icon 78) is displayed on the screen 34. Accordingly, it is possible to easily allow the user 13 to select the layout candidate 76 preferred by the user 13.

In addition, in the present embodiment, the plurality of images 66 recorded on the memory card 58 are displayed on the screen 34 as the plurality of thumbnail images 68, and an image 66 corresponding to a thumbnail image 68 selected from the plurality of thumbnail images 68 among the plurality of images 66 is set as the selected image 66A. Accordingly, it is possible to easily allow the user 13 to select the layout candidate 76 preferred by the user 13.

In addition, in the present embodiment, the layout candidate 76 in which the frames 76A are arranged in a layout according to the number of the plurality of selected images 66A selected from the plurality of images 66 including the captured image 98 obtained by performing the interval imaging or the continuous imaging is displayed on the screen 34. Then, the layout image 84 obtained by allocating the selected image 66A into the frame 76A is output in response to the output instruction 82. Accordingly, it is possible to quickly obtain the layout image 84 in which the selected images 66A are arranged in a layout according to the number of the selected images 66A selected from the plurality of images 66 including the captured image 98 obtained by performing the interval imaging or the continuous imaging, compared to a case in which the user 13 manually selects and lays out any image 66 from the plurality of images 66 including the captured image 98 obtained by performing the interval imaging or the continuous imaging.

In addition, in the present embodiment, the plurality of images 66 include the latest image 66 obtained by performing the interval imaging or the continuous imaging. Then, the latest image 66 is preferentially selected as the selected image 66A. Accordingly, it is possible to quickly obtain the layout image 84 in which the selected images 66A are arranged in a layout according to the number of the selected images 66A selected from the plurality of images 66 including the layout image 66, compared to a case in which the user 13 manually selects and lays out any image 66 from the plurality of images 66 including the layout image 66.

In addition, in the present embodiment, the plurality of images 66 include the plurality of captured images 98 obtained by performing the interval imaging or the continuous imaging and the plurality of additional images 106 already recorded on the memory card 58 at a stage before the interval imaging or the continuous imaging or at a stage in which the interval imaging or the continuous imaging is performed. Accordingly, it is possible to quickly obtain the layout image 84 in which the selected images 66A are arranged in a layout according to the number of the selected images 66A selected from the plurality of images 66 including the captured image 98 and the additional image 106, compared to a case in which the user 13 manually selects and lays out any image 66 from the plurality of images 66 including the captured image 98 and the additional image 106.

In addition, in the present embodiment, the plurality of existing images 100 recorded on the memory card 58 are displayed in a list on the screen 34 as the plurality of candidate images 102, and the candidate image 102 selected from the plurality of candidate images 102 is set as the additional image 106. Therefore, the candidate images 102 narrowed down from the plurality of candidate images 102 are displayed on the screen 34 as the additional images 106 and can be selected by the user 13, so that the user 13 can quickly determine the selected image 66A.

In addition, in the present embodiment, the plurality of candidate images 102 are displayed on the screen 34 in response to the display instruction 96. Accordingly, the candidate image 102 preferred by the user 13 can be allocated to the frame 76A as the selected image 66A.

In addition, in the present embodiment, the layout image 84 is recorded on the recording medium 14A of the server 14 in response to the output instruction 82 given by the user 13 to the smart device 12 via the touch panel 32. Accordingly, the layout image 84 can be recorded on the recording medium 14A at a timing intended by the user 13.

In addition, in the present embodiment, the layout image 84 is printed by the printing device 18 in response to the output instruction 82 given by the user 13 to the smart device 12 via the touch panel 32. Accordingly, the printing device 18 can print the layout image 84 at a timing intended by the user 13.

In addition, in the present embodiment, a default state in which the download of the layout image 84 from the server 14 is suppressed is released on a condition in which the output instruction 82 is given to the smart device 12 by the user 13 via the touch panel 32. Accordingly, it is possible to prevent the capacity of a storage of a download destination from being exhausted, compared to a case in which the layout image 84 is always permitted to be downloaded and stored in the storage of the download destination.

In the example shown in Fig. 7 described in the above-described embodiment, a form example in which the layout candidate 76 is selected by selecting the icon 78 has been described, but this is merely an example. For example, the layout candidate 76 displayed on the screen 34 may be moved in a left-right direction (or an up-down direction) in response to an instruction accompanying an operation (for example, a swipe or a flick) of the user, so that the layout candidate 76 displayed on the screen 34 is changed. For example, the display of the layout candidate 76 in which the plurality of frames 76A are arranged in the layout indicated by the plurality of icons 78 shown in Fig. 7 need only be sequentially switched in response to an instruction given by the user. In this case as well, the selected image 66A may be allocated and displayed into each frame 76A in the layout candidate 76 displayed on the screen 34, or each frame 76A may be displayed as a blank, and the selected image 66A may be allocated and displayed into each frame 76A thereafter. In addition, the icon 78 corresponding to the layout candidate 76 displayed on the screen 34 may be displayed in a more emphasized manner than the other icons 78, so that the user 13 can visually ascertain which icon 78 corresponds to the layout candidate 76 currently displayed on the screen 34, from the display state of the icon 78.

In the above-described embodiment, a form example in which the layout candidate 76 in which the selected image 66A is allocated into the frame 76A is displayed on the screen 34 has been described, but the present disclosure is not limited to this. For example, after the layout candidate 76 including the frame 76A to which the selected image 66A is not allocated is displayed on the screen 34, the selected image 66A may be allocated to the frame 76A and displayed.

In the above-described embodiment, a form example in which the image management processing 62 is performed by the computer 40 has been described, but the present disclosure is not limited to this. At least a part of processing included in the image management processing 62 may be performed by a device provided outside the computer 40. Hereinafter, an example of this case will be described with reference to Fig. 15.

Fig. 15 is a conceptual diagram showing an example of a configuration of an image management system 110. In the example shown in Fig. 15, the image management system 110 is an example of an "image processing device" according to the present disclosure.

The image management system 110 comprises the computer 40 and an external device 112. For example, the external device 112 is a server and is communicably connected to the computer 40 via the network 16 (for example, a WAN and/or a LAN). Although a server is exemplified here, at least one personal computer or the like may be used as the external device 112 instead of the server.

An example of the external device 112 is at least one server that directly or indirectly transmits data to or receives data from the computer 40 via the network 16. The external device 112 receives a processing execution instruction given by the processor 48 of the computer 40 via the network 16. Then, the external device 112 executes processing according to the received processing execution instruction and transmits a processing result to the computer 40 via the network 16. In the computer 40, the processor 48 receives the processing result transmitted from the external device 112 via the network 16 and executes processing using the received processing result.

Examples of the processing execution instruction include an instruction to cause the external device 112 to execute at least a part of the image management processing 62. A first example of at least the part of the image management processing 62 (that is, processing executed by the external device 112) is processing of determining the layout candidate 76. In this case, the external device 112 executes the processing of determining the layout candidate 76 in response to the processing execution instruction given by the processor 48 via the network 16, and transmits a first processing result (for example, the layout candidate 76), which is a processing result, to the computer 40 via the network 16. In the computer 40, the processor 48 receives the first processing result and executes the same processing as that in the above-described embodiment using the received first processing result.

A second example of at least the part of the image management processing (that is, processing executed by the external device 112) is processing of generating the layout image 84. In this case, the external device 112 executes the processing of generating the layout image 84 in response to the processing execution instruction given by the processor 48 via the network 16, and transmits a second processing result (for example, the layout image 84), which is a processing result, to the computer 40 via the network 16. In the computer 40, the processor 48 receives the second processing result and executes the same processing as that in the above-described embodiment using the received second processing result.

In addition, the external device 112 may be implemented by cloud computing. The cloud computing is merely an example, and the external device 112 may be implemented by network computing such as fog computing, edge computing, or grid computing.

In the above-described embodiment, a form example in which the image management program 60 is stored in the storage 50 has been described, but the present disclosure is not limited to this. For example, the image management program 60 may be stored in a portable computer-readable non-transitory storage medium such as an SSD or a USB flash drive. The image management program 60 stored in the non-transitory storage medium is installed in the computer 40 of the smart device 12. The processor 48 executes the image management processing in accordance with the image management program 60.

In addition, the image management program 60 may be stored in a storage device such as another computer or a server connected to the smart device 12 via a network, and the image management program 60 may be downloaded in response to a request from the smart device 12 and installed in the computer 40.

It is not necessary to store the entirety of the image management program 60 in a storage device such as another computer or a server device connected to the smart device 12 or to store the entirety of the image management program 60 in the storage 50, and a part of the image management program 60 may be stored.

As a hardware resource that executes the image management processing, various processors described below can be used. Examples of the processors include a CPU which is a general-purpose processor functioning as the hardware resource for executing the image management processing by executing software, that is, a program. In addition, examples of the processor include a dedicated electric circuit which is a processor having a circuit configuration designed to be dedicated to executing specific processing, such as an FPGA, a PLD, or an ASIC. A memory is built in or connected to each processor, and each processor uses the memory to execute the image management processing.

The hardware resource for executing the image management processing may be configured of one of the various processors or may be configured of a combination of two or more processors of the same type or different types (for example, combination of a plurality of FPGAs or combination of CPU and FPGA). In addition, the hardware resource for executing the image management processing may be one processor.

As a configuring example of one processor, first, there is a form in which one processor is configured of a combination of one or more CPUs and software and the processor functions as the hardware resource for executing the image management processing. Secondly, as typified by an SoC, there is a form in which a processor that realizes functions of the entire system including the plurality of hardware resources for executing the image management processing with one IC chip is used. As described above, the image management processing is realized by using one or more of various processors as the hardware resource.

As a hardware structure of these various processors, more specifically, an electric circuit in which circuit elements such as semiconductor elements are combined can be used. In addition, the above image management processing is merely an example. Accordingly, it is possible to delete an unnecessary step, add a new step, or change a processing order without departing from the gist of the present disclosure.

The above-described contents and the above-shown contents are the detailed description of the parts according to the present disclosure, and are merely examples of the present disclosure. For example, description related to the above configurations, functions, actions, and effects is description related to an example of configurations, functions, actions, and effects of the parts relating to the present disclosure. Thus, it is needless to say that unnecessary parts may be deleted, new elements may be added, or replacement may be made to the content of the above description and the content of the drawings without departing from the gist of the present disclosure. In addition, in order to avoid complications and facilitate understanding of the parts according to the present disclosure, the description of common technical knowledge or the like, which does not particularly require the description for enabling the implementation of the present disclosure, is omitted in the above-described contents and the above-shown contents.

All documents, patent applications, and technical standards mentioned in the present specification are incorporated herein by reference to the same extent as in a case in which each document, each patent application, and each technical standard are specifically and individually described by being incorporated by reference.

## Claims

1. An image processing device (40, 110) comprising:
a processor (48),
wherein the processor (48) is configured to
display, on a screen (34), a layout candidate (76) in which a plurality of frames (76) are arranged in a layout according to the number of one or more selected images (66A) selected from a plurality of images (66), and
output a layout image (84) obtained by allocating the selected image (66A) into the frame (76) in response to a given output instruction (86, 88).

2. The image processing device (40, 110) according to claim 1,
wherein the layout candidate (76) is output with the selected image (66A) allocated into the frame (76).

3. The image processing device (40, 110) according to claim 2,
wherein the selected image (66A) allocated into the frame (76) is deleted from the frame (76) in response to a given deletion instruction (80), and
the layout candidate (76) displayed on the screen (34) is changed according to the number of the selected images (66A) remaining after the selected image (66A) is deleted from the frame (76).

4. The image processing device (40, 110) according to any one of claims 1 to 3,
wherein there are a plurality of the layout candidates (76), and
the layout candidate (76) displayed on the screen (34) is changed in response to a given selection instruction (74).

5. The image processing device (40, 110) according to any one of claims 1 to 4,
wherein there are a plurality of the layout candidates (76), and
the plurality of layout candidates (76) are displayed on the screen (34) with an object (78).

6. The image processing device (40, 110) according to claim 5,
wherein, in a case in which the object (78) is selected, the layout candidate (76) corresponding to the selected object (78) is displayed on the screen (34).

7. The image processing device (40, 110) according to any one of claims 1 to 6,
wherein the plurality of images (66) are displayed on the screen (34) as a plurality of thumbnail images (68), and
an image corresponding to a thumbnail image (68) selected from the plurality of thumbnail images (68) among the plurality of images (66) is set as the selected image (66A).

8. The image processing device (40, 110) according to any one of claims 1 to 7,
wherein the plurality of images (66) include a captured image (98) obtained by performing imaging.

9. The image processing device (40, 110) according to claim 8,
wherein the plurality of images (66) include one or more captured images (98) obtained by performing the imaging and one or more additional images (106) already recorded on a first recording medium (58) at a stage before the imaging or at a stage in which the imaging is performed.

10. The image processing device (40, 110) according to claim 9,
wherein the additional image (106) is a candidate image (102) selected from a plurality of candidate images (102) recorded on the first recording medium (58).

11. The image processing device (40, 110) according to claim 10,
wherein the plurality of candidate images (102) are displayed on the screen (34) in response to a given display instruction (96).

12. The image processing device (40, 110) according to any one of claims 1 to 11,
wherein the output instruction (88) includes a recording instruction (88) to record the layout image (84) on a second recording medium (14A).

13. The image processing device (40, 110) according to any one of claims 1 to 12,
wherein the output instruction (88) includes a print instruction (86) to cause a printing device to print the layout image (84), and
a default state in which the output of the layout image (84) is suppressed is released on a condition in which the print instruction (86) is given.

14. An image processing method comprising:
displaying, on a screen (34), a layout candidate (76) in which a plurality of frames (76) are arranged in a layout according to the number of one or more selected images (66A) selected from a plurality of images (66); and
outputting a layout image (84) obtained by allocating the selected image (66A) into the frame (76) in response to a given output instruction (86).

15. A storage medium (50) storing a program (60) executable by a computer (40) to execute a process comprising:
displaying, on a screen (34), a layout candidate (76) in which a plurality of frames (76) are arranged in a layout according to the number of one or more selected images (66A) selected from a plurality of images (66); and
outputting a layout image (84) obtained by allocating the selected image (66A) into the frame (76) in response to a given output instruction (86).
